# FASCICULE DE BREVET EUROPEEN

(11) **EP 1 178 018 B1**
(45) Date de publication et mention de la délivrance du brevet: **03.12.2003**
(21) Numéro de dépôt: 01401943.4
(22) Date de dépôt: 19.07.2001
(51) Int. Cl.: C03B 37/012

(54) **Procédé et dispositif de fabrication d'une preforme de fibre optique**
Verfahren und Vorrichtung zum Herstellen einer Vorform für optische Fasern
Process and apparatus for manufacturing an optical fibre preform

(30) Priorité: 31.07.2000 FR 0010040
(43) Date de publication de la demande: 06.02.2002
(73) Titulaire: ALCATEL, 75008 Paris (FR)
(72) Inventeur: Lavanant, Gérard, 59130 Lambersart (FR); Gouez, Benoit, NE Hickory, NC 28601 (US); Petitfrère, Emmanuel, 59800 Lille (FR)
(74) Mandataire: Vigand, Régis Louis Michel

(56) Documents cités:
- EP-A- 0 719 738
- EP-A- 0 875 489
- EP-A- 0 936 194
- GB-A- 2 134 896

## Description

La présente invention concerne la fabrication de préforme de fibre optique. Elle concerne en particulier un procédé et un dispositif de fabrication d'une préforme de fibre optique.

La fabrication d'une préforme, à partir d'une autre préforme dite primaire, laquelle comprend la partie optiquement guidante de la fibre optique issue de ladite préforme, par une technique de dépôt externe, latéral, telle que la technique de recharge plasma est aussi connue, et décrite par exemple dans la demande de brevet EP-A1-0.450.465. La préforme finale ainsi obtenue, appelée plus généralement simplement préforme, est destinée à fabriquer une fibre optique par fibrage.

La demande de brevet EP-A1-0.875.489 décrit un procédé de fabrication de préforme de fibre optique, qui comprend le déplacement en rotation d'une préforme cylindrique primaire le long de son axe, le déplacement relatif en translation de la préforme et d'une torche à plasma, et l'introduction d'une poudre de verre dans la flamme plasma, la poudre de verre étant accélérée avant qu'elle ne pénètre dans la flamme plasma par un gaz accélérateur introduit dans le courant de poudre de verre progressant par gravité. Le réglage de l'accélération est effectué par débit du gaz accélérateur. Le gaz accélérateur peut subir un pré-traitement tel qu'un chauffage ou l'introduction de matière de dopage en son sein. L'axe de la flamme du plasma et l'axe de la préforme sont décalés, d'une valeur généralement fonction de l'accélération de la poudre.

Or il est difficile avec un procédé tel que décrit dans la demande de brevet EP-A1-0.875.489 d'optimiser le rendement de dépôt de silice, parce qu'il faut gérer l'évacuation de la chaleur générée par la torche à plasma, ce qui peut gêner le dépôt de silice sur la préforme. En effet la mise en place d'une évacuation efficace de la chaleur implique une extraction d'air, et donc une perturbation du flux du gaz accélérateur. Par suite le grain arrive de façon désordonnée, non maîtrisée, sur la préforme et ainsi tout l'avantage de l'utilisation de gaz accélérateur se trouve compromis voire perdu.

Le procédé selon l'invention vise principalement à augmenter le rendement de dépôt du procédé de dépôt externe. Il vise aussi à permettre dans de bonnes conditions l'évacuation de la chaleur de la torche plasma sans perturber l'introduction de poudre dans la flamme plasma.

A cet effet, l'invention concerne un procédé de fabrication de préforme de fibre optique, qui comprend le déplacement en rotation d'une préforme cylindrique primaire le long de son axe, le déplacement relatif en translation de la préforme et d'une torche à plasma, et l'introduction d'une poudre de verre dans la flamme plasma, la poudre de verre étant accélérée avant qu'elle ne pénètre dans la flamme plasma par un gaz accélérateur introduit dans le courant de poudre de verre progressant par gravité, ledit procédé étant **caractérisé en ce que** le procédé de fabrication s'effectue dans une enceinte **et en ce que** l'introduction de poudre de verre se fait dans l'enceinte dans une atmosphère gazeuse à pression inférieure à la pression extérieure à l'enceinte, la différence de pression entre ladite enceinte et le milieu extérieur à l'enceinte étant régulée.

La pression extérieure à l'enceinte, ou la pression dumilieu extérieur à l'enceinte, est généralement la pression de stockage de la poudre de verre avant son introduction dans la flamme du plasma, en dehors de l'enceinte.

Généralement, la différence de pression est régulée à une valeur comprise le plus souvent entre -0,3.10² et -2.10² Pa. Par exemple elle est de -0,9.10² Pa.

La régulation de la dépression se fait généralement par étalonnage sur des préformes qui servent de préformes d'essais. En effet, une telle dépression de référence est principalement fonction de différents paramètres du système. Pour l'étalonnage, il faut donc, par une ou plusieurs préformes d'essais, évaluer différentes valeurs de dépression par rapport au débit de gaz accélérateur, à atmosphère extérieure (température et degré d'humidité) donnée, pour un type de préforme donnée et une poudre de verre de granulométrie donnée.

L'invention concerne également un dispositif de fabrication de préforme de fibre optique, qui comprend une torche à plasma, un dispositif de déplacement en rotation d'une préforme primaire le long de son axe, un dispositif de déplacement relatif en translation de ladite préforme et de ladite torche, un dispositif d'alimentation en poudre de verre de la flamme de ladite torche, ledit dispositif d'alimentation comportant lui-même un moyen d'injection de gaz d'accélération, ledit dispositif étant **caractérisé en ce qu**'il comporte une enceinte pour la fabrication de préforme **et en ce que** ladite enceinte est reliée à un dispositif de régulation de la pression (P2) dans l'enceinte inférieure à la pression (P1) extérieure à l'enceinte.

Avantageusement, ledit dispositif de régulation permet de maintenir la pression dans l'enceinte à une pression inférieure à la pression extérieure à l'enceinte.

La pression extérieure à l'enceinte est le plus généralement la pression de stockage de la poudre de verre avant son introduction dans la flamme du plasma, en dehors de l'enceinte.

Généralement, ledit dispositif de régulation de pression maintient la différence de pression dans l'enceinte (c'est-à-dire la pression de l'enceinte à laquelle il faut retrancher la pression extérieure) à une valeur comprise le plus souvent entre -0,3.10² et -2.10² Pa, par exemple de -0,9.10² Pa, par rapport à la pression extérieure à l'enceinte.

La régulation de la dépression se fait généralement par étalonnage sur des préformes qui servent de préformes d'essais. En effet, une telle dépression de référence est principalement fonction de différents paramètres du système. Pour l'étalonnage, il faut donc, par une ou plusieurs préformes d'essais, évaluer différentes valeurs de dépression par rapport au débit de gaz accélérateur, à atmosphère extérieure (température et degré d'humidité) donnée, pour un type de préforme donnée et une poudre de verre de granulométrie donnée.

Selon un mode de réalisation, ledit dispositif comprend un dispositif de mesure de la différence de pression entre l'enceinte et le milieu extérieur à l'enceinte.

Selon un mode de réalisation, différent ou non du mode de réalisation précédent, ledit dispositif comprend en outre un moyen de soufflage d'air dans l'enceinte.

Selon un mode de réalisation, différent ou non du mode de réalisation précédent, ledit dispositif comprend en outre un moyen d'extraction d'air de l'enceinte vers le milieu extérieur à l'enceinte.

L'invention sera mieux comprise et d'autres caractéristiques et avantages apparaîtront à la lecture de la description qui va suivre, donnée à titre non limitatif, par référence aux figures 1 à 3.
La figure 1 représente de façon très schématique un dispositif de recharge plasma dans lequel est mis en oeuvre le procédé de l'invention.
La figure 2 représente de façon très schématique une vue verticale, selon les axes X et Y, des pièces 3, 4 et 5 de la figure 1.
La figure 3 représente de façon très schématique une vue de ladite pièce 5.

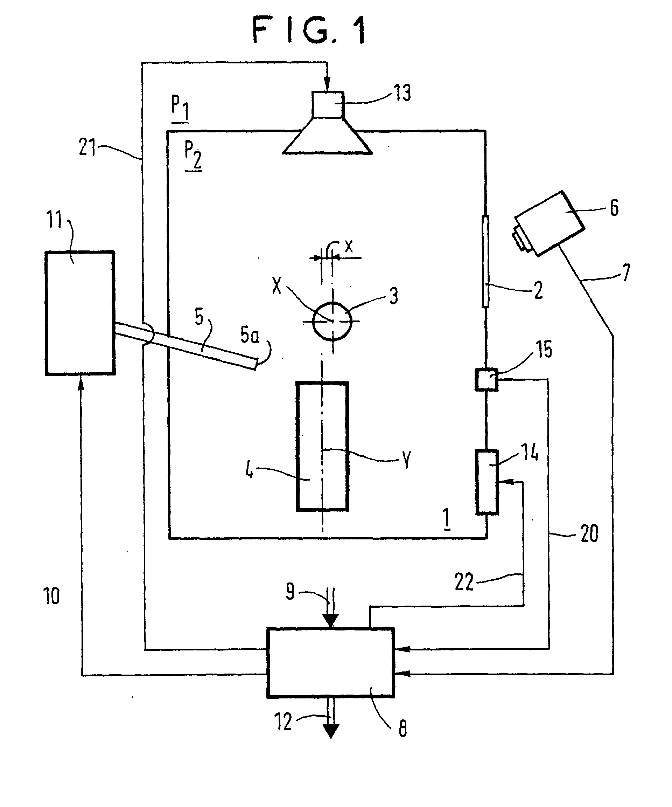

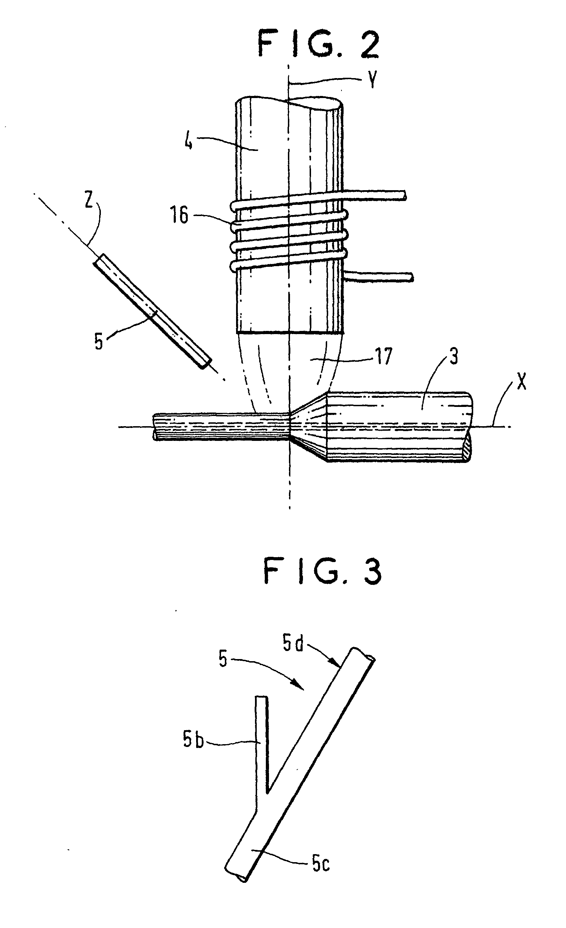

La figure 1 représente de façon très schématique un dispositif de recharge plasma. Les figures 2 et 3 permettent de préciser des pièces de la figure 1. Le dispositif de recharge plasma selon l'invention comprend une enceinte 1, pourvue d'une fenêtre transparente 2, une préforme 3 vue de bout, d'axe longitudinal X, vers laquelle sont dirigées une torche 4 à plasma, d'axe longitudinal Y, et une buse d'alimentation en grains de recharge 5, d'orifice 5a, d'axe longitudinal Z. Ainsi que l'on peut le voir sur la figure 2, le chauffage est généré par une boucle d'induction 16, et la torche 4 génère une flamme 17 de plasma. A l'extérieur de l'enceinte 1, une caméra CCD 6, disposée derrière la fenêtre 2, est pointée sur la préforme 3. Elle fournit une mesure du diamètre de la préforme 3, à l'endroit où elle est pointée, sous la forme d'une valeur transmise par une liaison 7 à un dispositif 8 de commande du processus de recharge.

La pression extérieure, atmosphérique, a pour valeur P1. La pression dans l'enceinte 1 a pour valeur P2, généralement strictement inférieure à P1. La différence de pression P2 - P1 est déterminée par un dispositif 15 de mesure, situé en bordure de l'enceinte 1. En particulier selon l'invention le dispositif 8 reçoit du dispositif 15 par une liaison 20 la mesure de la différence de pression P2 - P1. Une valeur de référence est déterminée au départ, éventuellement après des mesures sur une ou plusieurs préformes de référence, en fonction de l'atmosphère extérieure (principalement sur les paramètres de température et de degré d'humidité) et du type de préforme fabriquée.

La différence de pression P2-P1, ou pression de consigne, est une pression constante ou variable, c'est-à-dire qu'elle peut être fixée à l'avance pour toute la fabrication, ou bien qu'elle peut varier au cours de la fabrication d'une préforme donnée en fonction d'éléments déterminés à l'avance au niveau de la régulation du dispositif 8 de commande.

Le dispositif 8 de commande peut ainsi réguler le débit d'air au sein de l'enceinte 1 par une liaison 22 de commande à un extracteur d'air 13 situé en bordure de l'enceinte 1, et/ou par une liaison 21 de commande à un souffleur d'air 14 situé en bordure de l'enceinte 1. Bien sûr, l'air qui entre dans l'enceinte 1 par le souffleur d'air 14 est d'une pureté compatible avec la fabrication d'une préforme 3 pour fibre optique.

Ainsi qu'illustré sur la figure 3, la buse 5 présente, outre une extrémité 5a, une partie supérieure 5d d'alimentation de grain par gravimétrie, à laquelle se joint l'alimentation de gaz accélérateur par le conduit 5b, pour former la partie inférieure 5c.

Le dispositif 8 de commande du processus de recharge reçoit, par une liaison multiple 9, d'autres indications sur des conditions du processus de recharge. Sous l'effet d'un programme interne de conduite du processus de recharge, le dispositif 8 peut fournir par exemple, sur une liaison de sortie 10 alimentant un dispositif de commande 11, une valeur de commande du positionnement de la buse 5 par rapport à la torche 4 et à la préforme 3, qui positionne en conséquence la buse 5 par déplacement de ladite buse 5 le long d'un axe parallèle à l'axe longitudinal X de la préforme 3. De préférence un tel positionnement est fixe pendant toute la durée du procédé de recharge de la préforme 3. Plus généralement, le dispositif 8 fournit, sur une liaison multiple de sortie 12, d'autres valeurs de commande déterminant d'autres aspects du processus de commande.

Tous les éléments du dispositif illustré par la figure 1 sont bien connus de l'homme du métier. D'autres, qui ne sont pas représentés, sont également bien connus. C'est ainsi que des moyens d'évaluation des positions relatives des pièces 3, 4 et 5, sont par exemple décrits dans la demande de brevet européen EP-A1-0.440.130.

La recharge plasma s'opère par passes, de droite à gauche, puis de gauche à droite, au cours desquelles la torche à plasma 4 et la buse 5 balaient la longueur de la préforme 3. Selon une variante, le positionnement de la buse 5 par rapport à la torche 4 varie au cours du processus en étant asservi au diamètre de la préforme 3. De plus, ainsi qu'il est visible sur la figure 3, les axes X de la préforme 3 et Y de la torche 4 sont séparés par une distance référencée x sur la figure 1.

La granulométrie de la poudre de silice, qui est éventuellement dopée, utilisée dans la fabrication selon l'invention, est connue de l'homme du métier. Typiquement elle est de l'ordre de quelques dixièmes de millimètre, par exemple de 0,1 à 0,2 mm.

Grâce au dispositif selon l'invention, tout le processus de commande est optimisé pour obtenir un rendement important de la quantité de dépôt de silice, à vitesse de translation donnée.

## Revendications

1. Procédé de fabrication de préforme (3) de fibre optique, qui comprend le déplacement en rotation d'une préforme (3) cylindrique primaire le long de son axe X, le déplacement relatif en translation de la préforme (3) et d'une torche (4) à plasma, et l'introduction (5) d'une poudre de verre dans la flamme plasma, la poudre de verre étant accélérée avant qu'elle ne pénètre dans la flamme plasma par un gaz accélérateur introduit dans le courant de poudre de verre progressant par gravité, ledit procédé étant **caractérisé en ce que** le procédé de fabrication s'effectue dans une enceinte **et en ce que** l'introduction de poudre de verre se fait dans une atmosphère gazeuse à pression (P2) inférieure à la pression (P1) extérieure à l'enceinte, la différence de pression entre ladite enceinte et le milieu extérieur à l'enceinte étant régulée.

2. Procédé selon la revendication 1 tel que la différence de pression (P2-P1) est régulée à une valeur comprise entre -0,3.10² et -2.10² Pa.

3. Dispositif de fabrication de préforme (3) de fibre optique, qui comprend une torche (4) à plasma, un dispositif de déplacement en rotation d'une préforme primaire (3) le long de son axe, un dispositif de déplacement relatif en translation de ladite préforme (3) et de ladite torche (4), un dispositif (5) d'alimentation en poudre de verre de la flamme de ladite torche (4), ledit dispositif d'alimentation comportant lui-même un moyen (5b) d'injection de gaz d'accélération,
ledit dispositif étant **caractérisé en ce qu**'il comporte une enceinte (1 ) pour la fabrication de préforme **et en ce que** ladite enceinte (1) est reliée à un dispositif (13, 14, 15, 20, 21, 22, 8) de régulation de la pression (P2) dans l'enceinte (1) inférieure à la pression (P1) extérieure à l'enceinte.

4. Dispositif selon la revendication 3 tel que ledit dispositif de régulation de pression maintient la pression dans l'enceinte à une valeur comprise entre -0,3.10² et -2.10² Pa, par rapport à la pression extérieure à l'enceinte.

5. Dispositif selon l'une des revendications 3 ou 4 tel que ledit dispositif comprend un dispositif (15) de mesure de la différence de pression entre l'enceinte (1) et le milieu extérieur à l'enceinte (1).

6. Dispositif selon l'une des revendications 3 à 5 tel que ledit dispositif comprend en outre un moyen (14) de soufflage d'air dans l'enceinte (1).

7. Dispositif selon l'une des revendications 3 à 6 tel que ledit dispositif comprend en outre un moyen (13) d'extraction d'air de l'enceinte (1) vers le milieu extérieur à l'enceinte (1) .

## Patentansprüche

1. Verfahren zum Herstellen einer Vorform (3) für optische Fasern, das aus einer Drehbewegung einer primären, zylindrischen Vorform (3) entlang ihrer Achse X, der relativen Translationsbewegung der Vorform (3) und einem Plasmabrenner (4), und dem Einbringen von Glasstaub in die Plasmaflamme
besteht, wobei der Glasstaub durch ein Beschleunigungsgas, das in den durch Schwerkraft verlaufenden Glasstaubstrom eingebracht wird, beschleunigt wird, bevor er in die Plasmaflamme gelangt,
wobei das genannte Verfahren **dadurch gekennzeichnet ist, dass** das Herstellungsverfahren innerhalb eines geschlossenen Raumes durchgeführt wird und dass das Einbringen von Glasstaub in einer gashaltigen Atmosphäre unter einem Druck (P2) erfolgt, der niedriger ist als der außerhalb des geschlossenen Raumes herrschende Druck, wobei die Druckdifferenz zwischen dem genannten, geschlossenen Raum und der Atmosphäre außerhalb des geschlossenen Raumes geregelt wird.

2. Verfahren nach Anspruch 1, wobei die Druckdifferenz (P2-P1) auf einen Wert zwischen -0,3.10² und -2.14² Pa geregelt wird.

3. Vorrichtung zum Herstellen einer Vorform (3) für optische Fasern, die einen Plasmabrenner (4), eine Vorrichtung für die Drehbewegung einer primären Vorform (3) entlang ihrer Achse, eine Vorrichtung für die relative Translationsbewegung der genannten Vorform (3) und des genannten Brenners (4), eine Zuführvorrichtung (5) für Glasstaub in die Flamme des genannten Brenners (4) besitzt, wobei die genannte Zufuhrvorrichtung selbst eine Einrichtung (5b) zum Einblasen des Beschleunigungsgases besitzt, wobei die genannte Vorrichtung **dadurch gekennzeichnet ist, dass** sie einen geschlossenen Raum (1) für die Herstellung der Vorform besitzt, und dass der genannte, geschlossene Raum (1) mit einer Vorrichtung (13, 14, 15, 20, 21, 22,8) zur Regelung des Drucks (P2) in dem geschlossenen Raum verbunden ist, wobei der Druck niedriger ist als der außerhalb des geschlossenen Raumes herrschende Druck (P1).

4. Vorrichtung nach Anspruch 3, wobei die Druckregelvorrichtung den Druck in dem geschlossenen Raum gegenüber dem außerhalb des geschlossenen Raumes herrschenden Druck auf einem Wert zwischen -0,3.10² und -2.10² Pa hält.

5. Vorrichtung nach einem der Ansprüche 3 oder 4, wobei die genannte Vorrichtung eine Vorrichtung (15) zum Messen der Druckdifferenz zwischen dem geschlossenen Raum (1) und dem Bereich außerhalb des geschlossenen Raumes (1) besitzt.

6. Vorrichtung nach einem der Ansprüche 3 bis 5, wobei die genannte Vorrichtung außerdem eine Einrichtung (14) zum Einblasen von Luft in den geschlossenen Raum (1) besitzt.

7. Vorrichtung nach einem der Ansprüche 3 bis 6, wobei die genannte Vorrichtung außerdem eine Einrichtung (13) zum Luftabzug aus dem geschlossenen Raum (1) in den Bereich außerhalb des geschlossenen Raumes (1) besitzt.

## Claims

1. A method of manufacturing an optical fiber preform (3), the method comprising rotating a primary cylindrical preform (3) about its own axis X, establishing relative displacement in translation between the preform (3) and a plasma torch (4), and introducing (5) a glass powder into the plasma flame, the glass powder being accelerated prior to penetrating into the plasma flame by means of an accelerator gas introduced into the flow of glass powder advancing under gravity, the method being **characterized in that** the manufacturing method takes place in an enclosure and **in that** glass powder introduction takes place in a gaseous atmosphere at a pressure (P2) lower than the pressure (P1) outside the enclosure, the pressure difference between said enclosure and the medium outside the enclosure being regulated.

2. A method according to claim 1, in which the pressure difference (P2 - P1) is regulated to a value lying in the range -0.3×10² Pa and -2.×10² Pa.

3. Apparatus for manufacturing an optical fiber preform (3), the apparatus comprising a plasma torch (4), means for causing a primary preform (3) to rotate about its own axis, means for establishing relative displacement in translation between said preform (3) and said torch (4), and feed means (5) for feeding glass powder to the flame of said plasma torch (4), said feed means itself including means (5b) for injecting acceleration gas, said apparatus being **characterized in that** it includes an enclosure (1) for preform manufacture and **in that** said enclosure (1) is connected to a pressure regulator unit (13, 14, 15, 20, 21, 22, 8) for regulating the pressure (P2) inside the enclosure (1) to less than the pressure (P1 ) outside the enclosure.

4. Apparatus according to claim 3, in which said pressure regulation unit maintains the pressure inside the enclosure at a value lying in the -0.3×10² Pa and -2.×10² Pa, relative to the pressure outside the enclosure.

5. Apparatus according to claim 3 or claim 4, in which said unit includes a device (15) for measuring the pressure difference between the enclosure (1 ) and the medium outside the enclosure (1 ).

6. Apparatus according to any one of claims 3 to 5, in which said unit further includes means (14) for blowing air into the enclosure (1 ).

7. Apparatus according to any one of claims 3 to 6, in which said unit further includes means (13) for extracting air from the enclosure (1 ) to the medium outside the enclosure (1 ).
